# EUROPÄISCHE PATENTANMELDUNG

(11) **EP 3 328 006 A1**
(43) Veröffentlichungstag der Anmeldung: **30.05.2018**
(21) Anmeldenummer: 17163255.7
(22) Anmeldetag: 28.03.2017
(51) Int. Cl.: H04L 12/58

(54) **SYSTEM ZUR COMPUTERBASIERTEN ÜBERTRAGUNG VON ELEKTRONISCHEN NACHRICHTEN, INSBESONDERE E-MAILS, ÜBER COMPUTERNETZWERKE, INSBESONDERE ÜBER DAS INTERNET**

(30) Priorität: 28.11.2016 DE 102016122866
(71) Anmelder: Gerzen, Valeri, 33609 Bielefeld (DE); Pede, Emil, 63811 Stockstadt (DE); Reichert, Aleksej, 31171 Nordstemmen (DE)
(72) Erfinder: Gerzen, Valeri, 33609 Bielefeld (DE)
(74) Vertreter: Zeitler Volpert Kandlbinder Patent- und Rechtsanwälte Partnerschaft mbB

(57) **Zusammenfassung**

Die Erfindung betrifft ein System zur computerbasierten Übertragung von E-Mails über Computernetzwerke, insbesondere über das Internet, bei dem die E-Mail-Adresse zusätzlich zum Zeichen @ wenigstens ein sich vom Zeichen @ unterscheidendes Trennzeichen umfasst.

## Beschreibung

Die Erfindung betrifft ein System zur computerbasierten Übertragung von elektronischen Nachrichten, insbesondere E-Mails, über Computernetzwerke, insbesondere über das Internet.

Die E-Mail ist ein System zur computerbasierten Verwaltung von elektronischen Nachrichten und deren Übertragung über Computernetzwerke, insbesondere über das Internet, also ein Kommunikationsmittel.

E-Mail wird als wichtigster und meistgenutzter Dienst des Internets angesehen, nicht zuletzt, weil es durch E-Mails möglich ist, Textnachrichten ebenso wie digitale Dokumente typischerweise in wenigen Sekunden rund um die Erde zuzustellen.

E-Mail ist ein asynchrones Kommunikationsmedium, was bedeutet, dass der Sender bzw. Absender seine Nachricht unabhängig davon versendet, ob der Empfänger sie sofort entgegennehmen kann oder nicht.

Heute werden E-Mails meist per SMTP verschickt. Zum Abrufen der E-Mails vom Zielserver existieren verschiedene Verfahren, etwa das POP3- oder IMAP-Protokoll oder Webmail. X.400 ist ein offener Standard, der hauptsächlich im LAN oder WAN benutzt wird.

Zum Schreiben, zum Versand, zum Empfang und zum Lesen von E-Mails gibt es derzeit zwei Möglichkeiten von sogenannten Benutzerschnittstellen.

Zur Nutzung von E-Mail kann ein E-Mail-Programm, auch E-Mail-Client oder Mail-User-Agent genannt, verwendet werden. Ein solches Programm ist lokal auf dem Computer des Benutzers installiert und kommuniziert mit einem oder mehreren E-Mail-Postfächern.

Alternativ kann via Webmail auf E-Mail zugegriffen werden. Hierbei verwaltet der Benutzer seine E-Mails in seinem Web-Browser. Ermöglicht wird dies durch eine Webanwendung auf dem Webserver des E-Mail-Providers, die ihrerseits auf das E-Mail-Postfach auf dem Webserver zugreift.

Eine E-Mail-Adresse bezeichnet eindeutig den Empfänger einer E-Mail und ermöglicht damit eine Zustellung an diesen Empfänger. So, wie sie für den Transport per SMTP im Internet verwendet wird, besteht sie aus zwei Teilen, nämlich einem "domain-part" und einem "local-part". Der "domain-part" benennt den MX Resource Record, meist identisch der Domain, des Mailservers, dem die E-Mail zugestellt werden soll. Der "local-part" identifiziert eindeutig den Besitzer eines E-Mail-Postfachs auf diesem Mailserver. Das @-Zeichen ist heute eines von drei Elementen einer E-Mail-Adresse im Internet. Es trennt die E-Mail-Adresse in eine benutzerspezifische Kennung, also den Benutzernamen, und in eine Host-Angabe, also die Domain bzw. den Hostnamen des Computers.

E-Mails haben gegenüber normaler Papier-Post den Vorteil, dass ihre Anschriften-und Absendertexte, die so genannten E-Mail-Adressen, deutlich kürzer sind als bei normalen Papier-Post-Adressen mit Name, Straße/Postfach, Postleitzahl, Ort und ggf. Land. E-Mail-Adressen können weitgehend frei gewählt werden und es besteht auch kein Zwang, den eigenen Namen bzw. bürgerlichen Namen in Klartext als E-Mail-Adresse zu verwenden, sofern der Domain-Inhaber keine Regeln zum Format seiner E-Mail-Adressen aufgestellt hat oder keine Gesetze gebrochen werden. Stattdessen sind ebenso Pseudonyme wählbar, womit eine höhere Anonymität erreicht wird, da die E-Mail-Adresse nicht oder nur begrenzt Aussage macht bzw. Rückschlüsse erlaubt über Namen, Herkunft, Geschlecht, Anschrift, geosozialen Status usw. Ebenso ist der Besitz mehrerer verschiedener E-Mail-Adressen möglich.

In der praktischen Handhabung bieten E-Mails ebenso Vorteile gegenüber der Papier-Post. Eine E-Mail kann gleichzeitig an mehrere Empfänger verschickt werden, wobei auch mit verdeckten Empfängerlisten gearbeitet werden kann, damit die komplette Empfängerliste nicht von jedem Empfänger einsehbar ist. E-Mails können auf dem Computer einfach archiviert und die Archive können leicht durchsucht werden, um eine E-Mail schnell wiederzufinden. Auch versendete und gelöschte E-Mails können automatisch archiviert werden.

Weltweit wurden im Jahre 2016 ca. 215 Milliarden E-Mails pro Tag verschickt. Es ist davon auszugehen, dass die Anzahl verschickter E-Mails von Jahr zu Jahr zunehmen wird. Für das Jahr 2020 wird bereits von ca. 260 Milliarden verschickter E-Mails pro Tag und für das Jahr 2030 schon von ca. 1000 Milliarden verschickter E-Mails pro Tag ausgegangen.

Auch die Zahl erforderlicher E-Mail-Adressen steigt, da immer mehr Menschen E-Mails als Kommunikationsmittel nutzen werden und nicht mehr genutzte E-Mail-Adressen üblicherweise nicht neu vergeben werden. Damit ist die Schwierigkeit verbunden, neue E-Mail-Adressen mit einem Wunschnamen anzulegen, da viele Wunschnamen, insbesondere eigene bzw. bürgerliche Namen, für die E-Mail-Adressen bereits verwendet werden.

Ausgehend von diesem Stand der Technik liegt der Erfindung die Aufgabe zugrunde die E-Mail bzw. das System zur computerbasierten Übertragung von elektronischen Nachrichten, insbesondere E-Mails, über Computernetzwerke, insbesondere über das Internet, von einem Absender an einen Empfänger, die jeweils, insbesondere aber der Empfänger, über eine individuelle E-Mail-Adresse, umfassend einen Benutzernamen, dem Zeichen @ und einen Hostnamen des Computers, verfügen, zu verbessern.

Erfindungsgemäß wird diese Aufgabe bei einem System nach dem Oberbegriff des Anspruchs 1 durch die kennzeichnenden Merkmale des Anspruchs 1 gelöst. Bevorzugte oder vorteilhafte Ausführungsformen der Erfindung ergeben sich aus den Unteransprüchen, der nachfolgenden Beschreibung sowie den beigefügten Figuren.

Bei einem System zur computerbasierten Übertragung von elektronischen Nachrichten, insbesondere E-Mails, über Computernetzwerke, insbesondere über das Internet, von einem Absender an einen Empfänger, die jeweils, zumindest aber der Empfänger, über eine individuelle E-Mail-Adresse, umfassend einem Benutzernamen, dem Zeichen @ und einem Hostnamen des Computers, verfügen, ist erfindungsgemäß vorgesehen, dass die E-Mail-Adresse zusätzlich zum Zeichen @ oder vorzugsweise anstelle des Zeichens @ wenigstens ein sich vom Zeichen @ unterscheidendes Trennzeichen umfasst, das weder im Benutzernamen noch im Hostnamen erscheint.

Dadurch wird eine Vielzahl neuartiger E-Mail-Adressen zur Verfügung gestellt, in denen die Trennzeichen nicht mehr nur die Funktion haben, den Benutzernamen vom Hostnamen zu trennen, sondern die E-Mail selbst bei sonst gleichen Benutzernamen und Hostnamen individualisieren. Das kann durch die Ausgestaltung des Trennzeichens, aber auch durch eine vorgegebene Zahl und Reihenfolge bei Verwendung mehrerer Trennzeichen erfolgen. Aufgrund des oder der Trennzeichen ist eine schnellere Zuordnung bzw. Verteilung der elektronischen Nachrichten möglich, was quasi zu einer Entlastung des Internets aufgrund der Schaffung zusätzlicher freier Kanäle im Internet führt. Neben dem derzeitigen System werden also weitere Systems zur Verfügung gestellt, die vorzugsweise miteinander inkompatibel sind. Das bedeutet, dass ein Benutzer einer E-Mail-Adresse gemäß Stand der Technik auch elektronische Nachrichten an einen Benutzer mit einer neuartigen E-Mail-Adresse übermitteln kann und umgekehrt. Auch der Benutzer einer neuartigen E-Mail-Adresse kann an den Benutzer einer weiteren neuartigen E-Mail-Adresse elektronische Nachrichten übermitteln und umgekehrt, selbst wenn die neuartigen E-Mail-Adressen unterschiedliche Trennzeichen und/oder eine andere Reihenfolge von Trennzeichen aufweisen sollten. Die neuartigen E-Mail-Adressen sind auch vorteilhaft für diejenigen Benutzer verwendbar, die im bisherigen System nicht mehr ihre Wunsch-E-Mail-Adresse anlegen konnten. Als Benutzer kommen Privatpersonen, Konzerne, Banken, Versicherungen, Militär, Städte etc. in Frage.

Es kann von Vorteil sein, wenn das wenigstens eine Trennzeichen in den ASCII-Code aufnehmbar ist, also durch Drücken einer oder mehrerer Tasten einer Tastatur aufrufbar ist.

Es kann von Vorteil sein, wenn das Trennzeichen eine Kombination zum einen aus wenigstens einem Buchstaben, wenigstens einer Ziffer und/oder wenigstens einem Satzzeichen und zum anderen aus einem grafischen Element ist. Das grafische Element dient dazu, dem Trennzeichen einen von sonst gebräuchlichen Zeichen unterscheidenden Charakter zu geben. Vorzugsweise ist das grafische Element identisch oder ähnlich zum grafischen Element des Zeichens @ ausgebildet, um auch eine neuartige E-Mail-Adresse als solche kenntlich zu machen.

Wie das Zeichen @ können die neuen Trennzeichen unterschiedlich buchstabiert und ausgesprochen werden. Das Zeichen @ wird in Deutschland beispielsweise als at buchstabiert und wie ät ausgesprochen. Entsprechend könnten die neuen Trennzeichen bei Verwendung der übrigen Buchstaben als bat, cat, dat, eat, fat, gat, hat, iat, jat, kat, lat, mat, nat, oat, pat, qat, rat, sat, tat, uat, vat, wat, xat, yat und zat buchstabiert und wie bät, cät, dät, eät, fät, gät, hät, iät, jät, kät, lät, mät, nät, oät, pät, qät, rät, sät, tät, uät, vät, wät, xät, yät und zät ausgesprochen werden. Bei Verwendung von Ziffern könnten die neuen Trennzeichen als einsat, zweiat, dreiat, vierat, fünfat, sechsat, siebenat, achtat, neunat, zehnat, elfat, zwölfat, dreizehnat usw. buchstabiert und wie einsät, zweiät, dreiät, vierät, fünfät, sechsät, siebenät, achtät, neunät, zehnät, zwölfät, dreizehnät usw. ausgesprochen werden.

Selbstverständlich kann der wenigstens eine Buchstabe, die wenigstens eine Ziffer und/oder das wenigstens eine Satzzeichen des Trennzeichens in jeder Schriftart ausgebildet sein.

Es kann von Vorteil sein, wenn das grafische Element zumindest teilweise, vorzugsweise größtenteils nach Art eines Kreises oder mehrere Kreise ausgebildet ist. Dadurch kann eine neuartige E-Mail-Adresse leichter, insbesondere aus der Gewohnheit heraus, als solche identifiziert werden.

Es kann von Vorteil sein, wenn das grafische Element zumindest teilweise, vorzugsweise größtenteils nach Art eines Rechtecks oder mehrerer Rechtecke ausgebildet ist. Auch durch diese Ausgestaltung des grafischen Elements kann eine neuartige E-Mail-Adresse leichter, insbesondere aus der Gewohnheit heraus, als solche identifiziert werden.

Es kann von Vorteil sein, wenn das grafische Element den Buchstaben, die Ziffer und/oder das Satzzeichen zumindest teilweise, vorzugsweise größtenteils einschließt. Auch durch diese Ausgestaltung des grafischen Elements kann eine neuartige E-Mail-Adresse leichter, insbesondere aus der Gewohnheit heraus, als solche identifiziert werden.

Es kann von Vorteil sein, wenn der Verlauf des grafischen Elements von wenigstens einem, insbesondere einem weiteren Buchstaben, wenigstens einer, insbesondere einer weiteren Ziffer und/oder wenigstens einem, insbesondere einem Satzzeichen unterbrochen ist. Dadurch wird die Zahl möglicher Trennzeichen signifikant gesteigert.

Es kann von Vorteil sein, wenn das grafische Element mehrere Enden aufweist, wobei kein, ein oder mehr als ein Ende als freies Ende oder als an den Buchstaben, die Ziffer und/oder dem Satzzeichen anschließendes Ende ausgebildet ist.

Es kann von Vorteil sein, wenn unterschiedliche Trennzeichen und/oder eine unterschiedliche Reihenfolge von Trennzeichen bei sonst gleichem Benutzernamen und gleichem Hostnamen des Computers unterschiedliche E-Mail-Adressen kennzeichnen.

Es kann von Vorteil sein, wenn die Auswahl des wenigstens einen Trennzeichens bestimmten Personengruppen, bestimmten Organisationen, bestimmten Institutionen, bestimmten Behörden bzw. Ämtern oder dergleichen oder bestimmten Rangordnungen innerhalb der vorgenannten Personengruppen, Organisationen, Institutionen, Behörden bzw. Ämtern oder dergleichen zugeordnet ist.

Für spezielle Bereiche, insbesondere für den Bereich der Verteidigung, der Geheimdienste oder dergleichen können bestimmte Trennzeichen vorgesehen sein.

Es kann von Vorteil sein, wenn der wenigstens eine Buchstabe ausgewählt ist aus der Gruppe, die alle Kleinbuchstaben umfasst.

Es kann von Vorteil sein, wenn der wenigstens eine Buchstabe ausgewählt ist aus der Gruppe, die die Kleinbuchstaben c, e, n, o, r, s, u, v, x und z umfasst.

Es kann von Vorteil sein, wenn der wenigstens eine Buchstabe ausgewählt ist aus der Gruppe, die die Kleinbuchstaben m und w umfasst.

Es kann von Vorteil sein, wenn der wenigstens eine Buchstabe ausgewählt ist aus der Gruppe, die die Kleinbuchstaben b, d, f, g, i, j, k, l, p, q, r und y umfasst.

Es kann von Vorteil sein, wenn das Trennzeichen über eine Computertastatur durch Drücken einer vorgegebenen Tastenkombination, vorzugsweise durch Drücken der vorgegebenen Tasten in vorgegebener Reihenfolge und/oder durch Gedrückthalten aller vorgegebenen Tasten, ganz bevorzugt durch Drücken der Tasten "Alt Gr" und des im Trennzeichen dominierenden "Buchstabens", der im Trennzeichen dominierende "Ziffer" oder des im Trennzeichen dominierenden "Satzzeichens" aufrufbar ist.

Bevorzugt handelt es sich um eine Tastenkombination, an die der Benutzer aufgrund des ähnlich aufrufbaren Zeichens @ bereits gewöhnt ist. Eine entsprechende Programmierung bzw. Tastenbelegung kann der Fachmann durchführen.

Alternativ sind beispielsweise auch Kombinationen der "Strg"-, der "Alt"-, der "F1"-bis "F12"-, der so genannten "Windows"- und/oder der "Shift"-Taste mit dem im Trennzeichen dominierenden "Buchstaben", der im Trennzeichen dominierenden "Ziffer" oder dem im Trennzeichen dominierenden "Satzzeichen" möglich.

Weitere Einzelheiten und vorteilhafte Ausgestaltungen der Erfindung ergeben sich aus der nachfolgenden Beschreibung in Verbindung mit der Zeichnung. In dieser zeigen
- Fig. 1 - 4: Ausführungsbeispiele von Trennzeichen,
- Fig. 5: zwei Beispiele neuartiger E-Mail-Adressen,
- Fig. 6 - 19: weitere Ausführungsbeispiele von Trennzeichen,
- Fig. 20: Darstellung von Kleinbuchstaben unterschiedlicher Schriftarten zur Erklärung, welche Kleinbuchstaben in einem Trennzeichen bevorzugt sind,
- Fig. 21: Darstellung bevorzugter Kleinbuchstaben in einem Trennzeichen und
- Fig. 22: Beispiel für Zuordnung von E-Mail-Adressen.

Erfindungsgemäß ist vorgesehen, dass eine E-Mail-Adresse zusätzlich zum Zeichen @ oder vorzugsweise anstelle des Zeichens @ wenigstens ein sich vom Zeichen @ unterscheidendes Trennzeichen umfasst, das weder im Benutzernamen noch im Hostnamen erscheint. Dadurch können eine Vielzahl neuer E-Mail-Adressen bereitgestellt werden. Vorzugsweise ist das Trennzeichen eine Kombination zum einen aus wenigstens einem Buchstaben, wenigstens einer Ziffer und/oder wenigstens einem Satzzeichen und zum anderen aus einem grafischen Element.

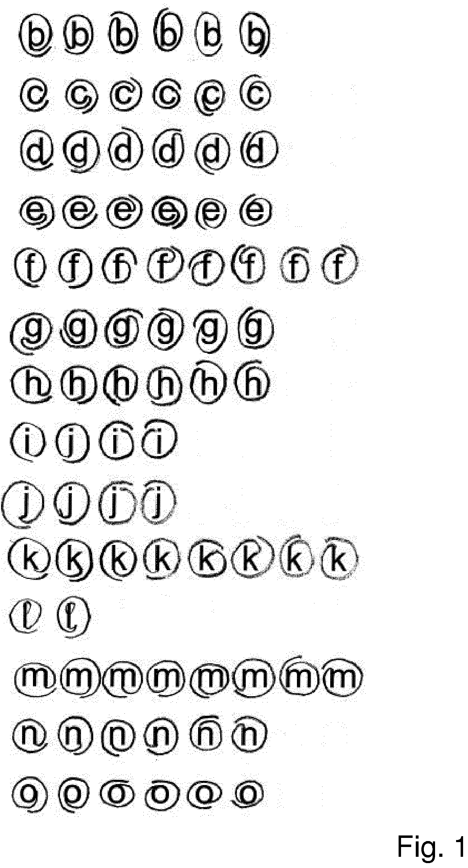

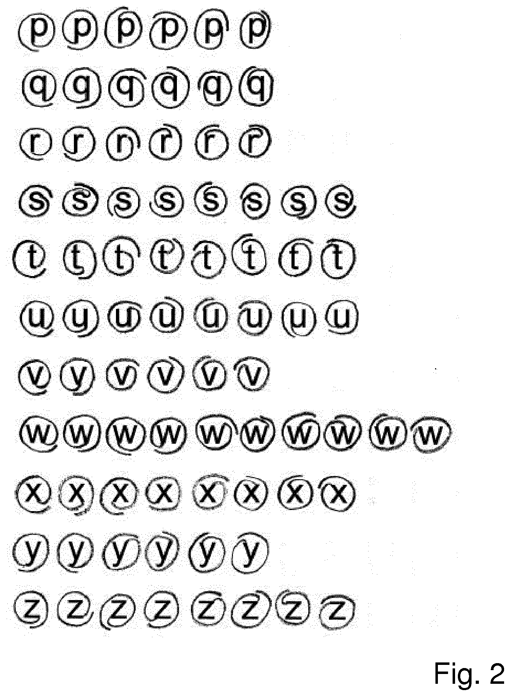

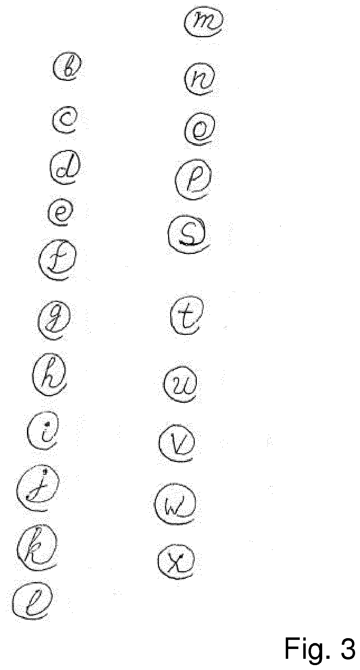

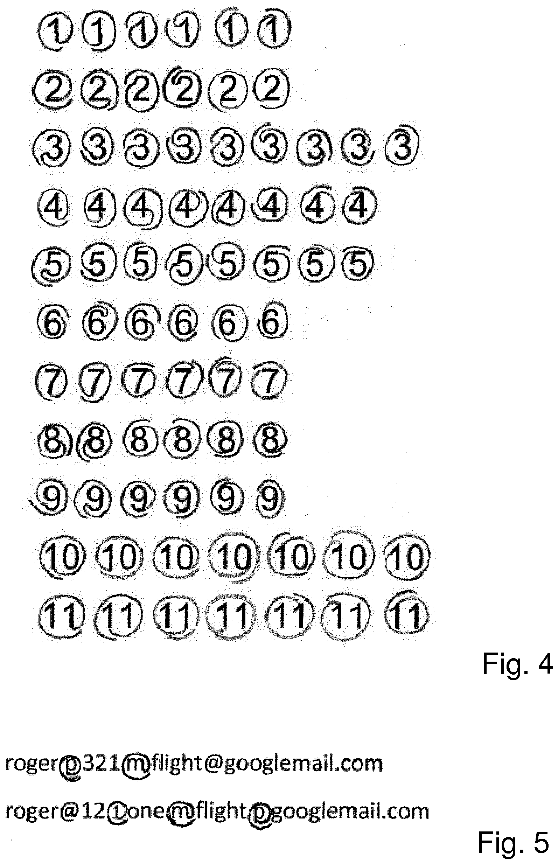

Fig. 1 - 3 zeigen Ausführungsbeispiele von Trennzeichen, die jeweils aus einem Kleinbuchstaben und einem grafischen Element bestehen. Fig. 4 zeigt Ausführungsbeispiele von Trennzeichen, die jeweils aus einer Ziffer und einem grafischen Element bestehen. Das jeweils in den Fig. 1 - 4 in einem Trennzeichen enthaltene grafische Element ist größtenteils nach Art eines Kreises ausgebildet und schließt den Buchstaben oder die Ziffer größtenteils ein. Das grafische Element weist zwei Enden auf, wobei ein oder mehr als ein Ende als freies Ende oder als an den Buchstaben oder an die Ziffer anschließendes Ende ausgebildet ist. Ein angeschlossenes Ende kann an unterschiedlichen Stellen des Buchstabes oder der Ziffer angeschlossen sein, wobei das grafische Element nach Art eines Kreises links oder rechts um den Buchstaben oder die Ziffer laufen kann.

Fig. 5 zeigt zwei Beispiele neuartiger E-Mail-Adressen. Die obere E-Mail-Adresse weist zusätzlich zu dem bekannten Zeichen @ zwei Trennzeichen auf. Die Kombination dieser beiden Trennzeichen und dem Zeichen @ in der entsprechenden Reihenfolge kennzeichnet eine neue Art von E-Mail-Adressen. Die untere E-Mail-Adresse weist drei erfindungsgemäße Trennzeichen auf. Die Kombination dieser drei Trennzeichen in der entsprechenden Reihenfolge kennzeichnet eine weitere neue Art von E-Mail-Adressen.

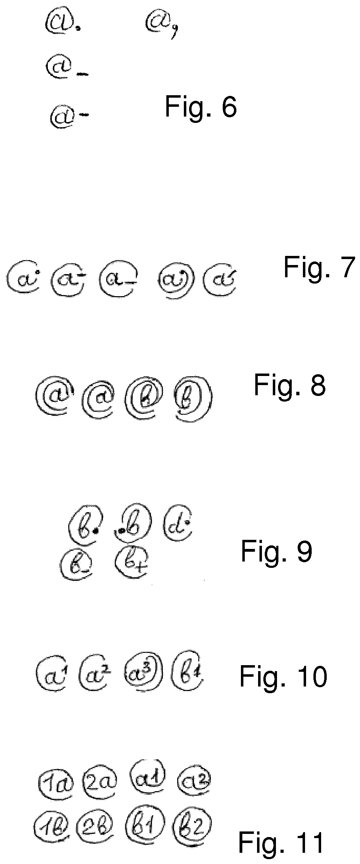

Fig. 6 - 19 zeigen weitere Ausführungsbeispiele von Trennzeichen.

Fig. 6, 7, 9, 12, 14 und 17 zeigen Ausführungsbeispiele von Trennzeichen, die aus einem Kleinbuchstaben, einem grafischen Element und einem Satzzeichen zusammengesetzt sind.

Fig. 8 zeigt Ausführungsbeispiele von Trennzeichen, die aus einem Kleinbuchstaben und einem grafischen Element zusammengesetzt sind. Das jeweils in Fig. 8 in einem Trennzeichen enthaltene grafische Element ist größtenteils nach Art zweier Kreise ausgebildet und schließt den Buchstaben größtenteils ein. Das grafische Element weist mehrere Enden auf, wobei ein oder mehr als ein Ende als freies Ende oder als an den Buchstaben oder die Ziffer anschließendes Ende ausgebildet ist. Ein angeschlossenes Ende kann an unterschiedlichen Stellen des Buchstabes angeschlossen sein, wobei das grafische Element nach Art eines Kreises links oder rechts um den Buchstaben laufen kann.

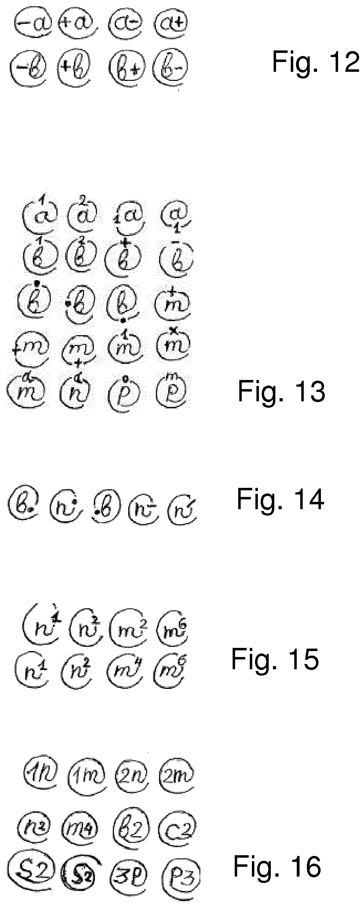

Fig. 10, 11, 15 und 16 zeigen Ausführungsbeispiele von Trennzeichen, die aus einem Kleinbuchstaben oder Großbuchstaben, einem grafischen Element und einer Ziffer zusammengesetzt sind. In Fig. 10 und 15 sind die Ziffern gegenüber den Buchstaben hochgestellt, in Fig. 11 und 16 nebengeordnet, entweder vor oder nach dem Buchstaben.

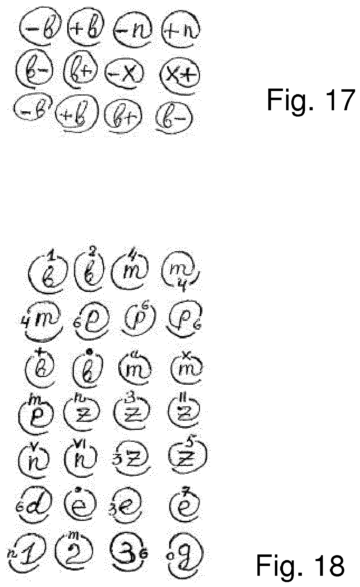

Fig. 13 und 18 zeigen Ausführungsbeispiele von Trennzeichen, die aus einem grafischen Element, einem vom grafischen Element größtenteils eingeschlossenen Kleinbuchstaben oder eine vom grafischen Element größtenteils eingeschlossene Ziffer sowie einer das grafische Element unterbrechende kleiner gehaltene Ziffer, einen das grafische Element unterbrechenden kleiner gehaltenen Buchstaben oder ein das grafische Element unterbrechendes kleiner gehaltenes Satzzeichen, zusammengesetzt sind.

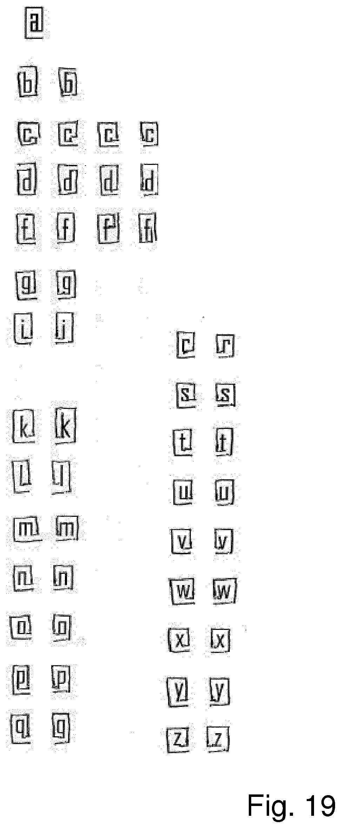

Fig. 19 zeigt Ausführungsbeispiele von Trennzeichen, die jeweils aus einem Kleinbuchstaben und einem grafischen Element bestehen. Das in der Fig. 19 in einem Trennzeichen enthaltene grafische Element ist größtenteils nach Art eines Rechtecks ausgebildet und schließt den Buchstaben größtenteils ein. Das grafische Element weist zwei Enden auf, wobei ein oder mehr als ein Ende als freies Ende oder als an den Buchstaben anschließendes Ende ausgebildet ist. Ein angeschlossenes Ende kann an unterschiedlichen Stellen des Buchstabes angeschlossen sein, wobei das grafische Element nach Art eines Rechtsecks links oder rechts um den Buchstaben laufen kann.

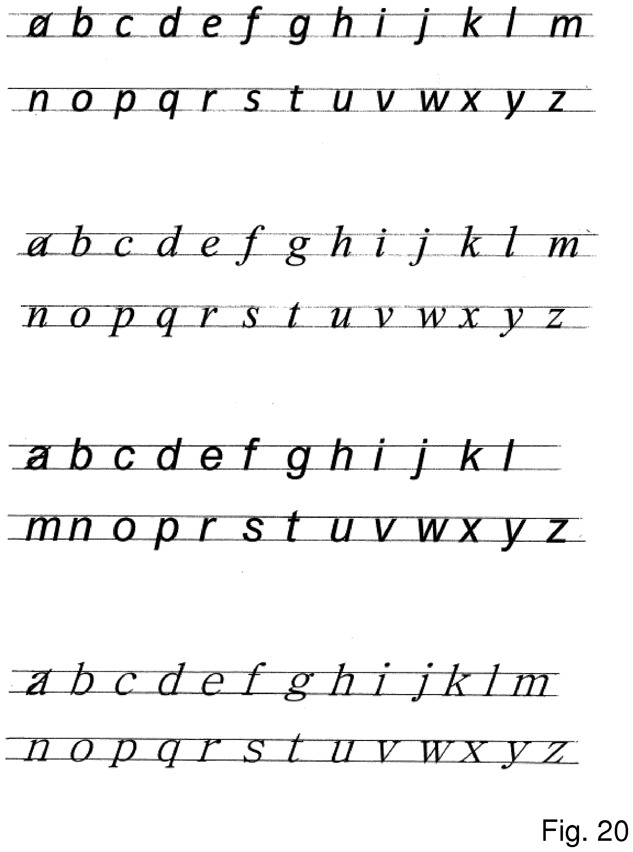

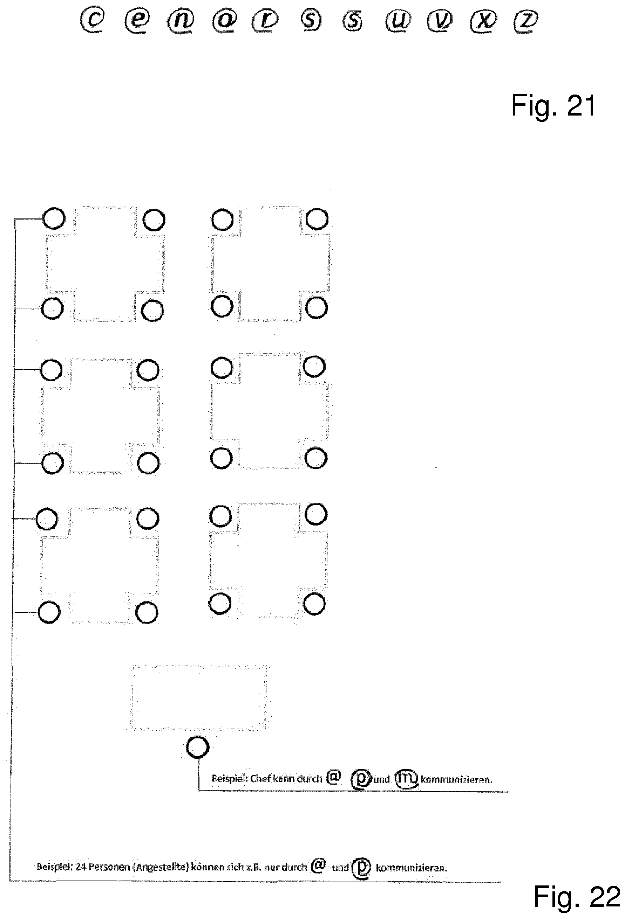

Erfindungsgemäß ist vorgesehen, dass der wenigstens eine Buchstabe des Trennzeichens ausgewählt ist aus der Gruppe, die Kleinbuchstaben umfasst. Um die Trennzeichen in ihren Maßen möglichst dem "a" im Zeichen @ zu entsprechen, ist vorgesehen, dass der wenigstens eine Buchstabe ausgewählt ist aus der Gruppe, die die Kleinbuchstaben c, e, n, o, r, s, u, v, x und z umfasst. Wie in Fig. 20 anhand von Kleinbuchstaben unterschiedlicher Schriftart dargestellt, sind es die vorgenannten Buchstaben, die dem entsprechen. Fig. 21 zeigt entsprechende Trennzeichen, die sich aus einem der vorgenannten Kleinbuchstaben und einem grafischen Elements zusammensetzen.

Es kann vorgesehen sein, dass der wenigstens eine Buchstabe ausgewählt ist aus der Gruppe, die die Kleinbuchstaben m und w umfasst. Diese Buchstaben sind lediglich etwas breiter als das "a" im Zeichen @ ausgeführt.

Darüber hinaus sollte der wenigstens eine Buchstabe ausgewählt sein aus der Gruppe, die die Kleinbuchstaben b, d, f, g, i, j, k, l, p, q, r und y umfasst. Diese Buchstaben sind lediglich etwas höher als das "a" im Zeichen @ ausgeführt.

Erfindungsgemäß kann es zweckmäßig sein, wenn die Auswahl des wenigstens einen Trennzeichens und damit die Benutzung der entsprechenden E-Mail-Adresse bestimmten Personengruppen, bestimmten Organisationen, bestimmten Institutionen, Behörden, Ämtern oder dergleichen oder bestimmten Rangordnungen innerhalb der vorgenannten Personengruppen, Organisationen, Institutionen, Behörden, Ämtern oder dergleichen zugeordnet ist. In Fig. 12 ist schematisch dargestellt, dass der Chef eines Unternehmens gegenüber dessen Angestellten beispielsweise über ein zusätzliches E-Mail-Systems kommunizieren kann. Das zusätzliche E-Mail-System stellt sicher, dass versendete E-Mails tatsächlich vom Chef des Unternehmens versendet werden.

## Patentansprüche

1. System zur computerbasierten Übertragung von elektronischen Nachrichten, insbesondere E-Mails, über Computernetzwerke, insbesondere über das Internet, von einem Absender an einen Empfänger, die jeweils, zumindest aber der Empfänger, über eine individuelle E-Mail-Adresse, umfassend einem Benutzernamen, dem Zeichen @ und einem Hostnamen des Computers, verfügen, **dadurch gekennzeichnet, dass** die E-Mail-Adresse zusätzlich zum Zeichen @ oder vorzugsweise anstelle des Zeichens @ wenigstens ein sich vom Zeichen @ unterscheidendes Trennzeichen umfasst, das weder im Benutzernamen noch im Hostnamen erscheint.

2. System nach Anspruch 1, **dadurch gekennzeichnet, dass** das wenigstens eine Trennzeichen in den ASCII-Code aufnehmbar ist.

3. System nach wenigstens einem der vorherigen Ansprüche, **dadurch gekennzeichnet, dass** das Trennzeichen eine Kombination zum einen aus wenigstens einem Buchstaben, wenigstens einer Ziffer und/oder wenigstens einem Satzzeichen und zum anderen aus einem grafischen Element ist.

4. System nach wenigstens einem der vorherigen Ansprüche, **dadurch gekennzeichnet, dass** das grafische Element zumindest teilweise, vorzugsweise größtenteils nach Art eines oder mehr als eines Kreises ausgebildet ist.

5. System nach wenigstens einem der vorherigen Ansprüche, **dadurch gekennzeichnet, dass** das grafische Element zumindest teilweise, vorzugsweise größtenteils nach Art eines oder mehr als eines Rechtecks ausgebildet ist.

6. System nach wenigstens einem der vorherigen Ansprüche, **dadurch gekennzeichnet, dass** das grafische Element den Buchstaben, die Ziffer und/oder das Satzzeichen zumindest teilweise, vorzugsweise größtenteils einschließt.

7. System nach wenigstens einem der vorherigen Ansprüche, **dadurch gekennzeichnet, dass** der Verlauf des grafische Elements von wenigstens einem Buchstaben, wenigstens einer Ziffer und/oder wenigstens einem Satzzeichen unterbrochen ist.

8. System nach wenigstens einem der vorherigen Ansprüche, **dadurch gekennzeichnet, dass** das grafische Element mehrere Enden aufweist, wobei kein, ein oder mehr als ein Ende als freies Ende oder als an den Buchstaben, die Ziffer und/oder dem Satzzeichen anschließendes Ende ausgebildet ist.

9. System nach wenigstens einem der vorherigen Ansprüche, **dadurch gekennzeichnet, dass** unterschiedliche Trennzeichen bei sonst gleichem Benutzernamen und gleichem Hostnamen des Computers unterschiedliche E-Mail-Adressen kennzeichnen.

10. System nach wenigstens einem der vorherigen Ansprüche, **dadurch gekennzeichnet, dass** die Auswahl des wenigstens einen Trennzeichens bestimmten Personengruppen, bestimmten Organisationen, bestimmten Institutionen oder dergleichen oder bestimmten Rangordnungen innerhalb der vorgenannten Personengruppen, Organisationen, Institutionen oder dergleichen zugeordnet ist.

11. System nach wenigstens einem der vorherigen Ansprüche, **dadurch gekennzeichnet, dass** der wenigstens eine Buchstabe ausgewählt ist aus der Gruppe, die die Kleinbuchstaben umfasst.

12. System nach wenigstens einem der vorherigen Ansprüche, **dadurch gekennzeichnet, dass** der wenigstens eine Buchstabe ausgewählt ist aus der Gruppe, die die Kleinbuchstaben c, e, n, o, r, s, u, v, x und z umfasst.

13. System nach wenigstens einem der vorherigen Ansprüche, **dadurch gekennzeichnet, dass** der wenigstens eine Buchstabe ausgewählt ist aus der Gruppe, die die Kleinbuchstaben m und w umfasst.

14. System nach wenigstens einem der vorherigen Ansprüche, **dadurch gekennzeichnet, dass** der wenigstens eine Buchstabe ausgewählt ist aus der Gruppe, die die Kleinbuchstaben b, d, f, g, i, j, k, l, p, q, r und y umfasst.

15. System nach wenigstens einem der vorherigen Ansprüche, **dadurch gekennzeichnet, dass** das Trennzeichen über eine Computertastatur durch Drücken einer vorgegebenen Tastenkombination, vorzugsweise durch Drücken der vorgegebenen Tasten in vorgegebener Reihenfolge und/oder durch Gedrückthalten aller vorgegebenen Tasten, ganz bevorzugt durch Drücken der Tasten "Alt Gr" und des im Trennzeichen dominierenden "Buchstabens", der im Trennzeichen dominierende "Ziffer" oder des im Trennzeichen dominierenden "Satzzeichens" aufrufbar ist.
